# EUROPÄISCHE PATENTSCHRIFT

(11) **EP 2 483 756 B1**
(45) Veröffentlichungstag und Bekanntmachung des Hinweises auf die Patenterteilung: **07.10.2020**
(21) Anmeldenummer: 10754417.3
(22) Anmeldetag: 27.08.2010
(51) Int. Cl.: G05D 1/02, G08G 1/123

(54) **SYSTEM VON MOBILEN ROBOTERN MIT EINER BASISSTATION**
SYSTEM OF MOBILE ROBOTS WITH A BASE STATION
SYSTÈME DE ROBOTS MOBILES AVEC STATION DE BASE

(30) Priorität: 28.09.2009 DE 102009043060
(43) Veröffentlichungstag der Anmeldung: 08.08.2012
(73) Patentinhaber: SEW-EURODRIVE GmbH & Co. KG, 76646 Bruchsal (DE)
(72) Erfinder: SLISKOVIC, Maja, 76275 Ettlingen (DE); SCHMIDT, Josef, 76676 Graben-Neudorf (DE)
(86) Internationale Anmeldenummer: PCT/EP2010/005269
(87) Internationale Veröffentlichungsnummer: WO 2011/035839

(56) Entgegenhaltungen:
- WO-A1-2005/103848
- WO-A1-2007/021230
- US-A1- 2009 062 974
- DESAI J P ET AL: "Controlling formations of multiple mobile robots", ROBOTICS AND AUTOMATION, 1998. PROCEEDINGS. 1998 IEEE INTERNATIONAL CO NFERENCE ON LEUVEN, BELGIUM 16-20 MAY 1998, NEW YORK, NY, USA,IEEE, US, Bd. 4, 16. Mai 1998 (1998-05-16), Seiten 2864-2869, XP010281335, DOI: 10.1109/ROBOT.1998.680621 ISBN: 978-0-7803-4300-9

## Beschreibung

Die Erfindung betrifft ein System von mobilen Robotern mit einer Basisstation.

Mobile Roboter sind beispielsweise als Spielzeuge bekannt. Sie umfassen einen Antrieb, beispielsweise einen Elektrischen Antrieb, und gegebenenfalls Sensoren.

Als Kommunikationsmittel sind beispielsweise Mobilfunktelefone bekannt. Diese bauen eine Kommunikationsverbindung zu einer Basisstation auf.

Für flexible Transportaufgaben werden in der Industrie Gabelstapler verwendet, die von einem Fahrer bedient werden müssen.

Aus der US 2009/062974 A1 ist ein System von mobilen Robotern mit einer Basisstation, wobei jeder Roboter zumindest einen Rechner umfasst, mit dem zumindest Antriebe des Roboters steuerbar sind.

Aus der WO 2007/021230 A1 ist ein Netzwerk für mobile Steuerungen bekannt.

Aus der WO 2005/103848 A1 ist ein offenes Steuerungssystem für mobile autonome Systeme bekannt.

Aus der Veröffentlichung DESAJ J P ET AL, "Controlling formations of multiple mobile robots" in ROBOTICS AND AUTOMATION, 1998. Proceedings. 1998 IEEE INTERNATIONAL CONFERENCE ON LEUVEN, BELGIUM, 16-20 MAY1998 (1998-05-16), Seiten 2864-2869, ISBN 978-0-7803-4300-9 sind Steuerungsformationen für vielfache mobile Roboter bekannt.

**Aus der** US 6 507 771 B1 **ist ein Verfahren zum Steuern der Bewegung einer Vielzahl von Agenten bekannt.**

**Aus der** JP 2003/ 071772 A1 **ist ein induktiv versorgbarer Roboter bekannt.**

**Aus der** US 2003 / 0 220 715 A1 **ist eine koordinierte Steuerung von Robotern bekannt.**

**Aus der** US 6 687 571 B1 **sind kooperierende Roboter bekannt**

Der Erfindung liegt daher die Aufgabe zugrunde, eine Anlage weiterzubilden, wobei Transportaufgaben flexibel und ohne Fahrer ausführbar sein sollen.

Erfindungsgemäß wird die Aufgabe bei dem System nach den in Anspruch 1 und bei dem Verfahren nach den in Anspruch 10 angegebenen Merkmalen gelöst.

Wichtige Merkmale der Erfindung bei dem System von mobilen Robotern mit einer Basisstation sind, dass wobei jeder Roboter zumindest einen Rechner umfasst, mit dem zumindest Antriebe des Roboters steuerbar sind,
wobei jeder Roboter ein mit dem jeweiligen Rechner verbundenes Kommunikationsmittel aufweist, mit dem eine Kommunikationsverbindung zu weiteren Robotern und/oder zur Basisstation aufbaubar ist,
wobei jeder Roboter ein Positionsbestimmungsmittel aufweist, das Information über die Position des Roboters zumindest auch aus der Entfernungsbestimmung zu Referenzsendern ermittelt,
wobei die Basisstation und Roboter als Referenzsender geeignet ausgeführt sind und/oder fungieren.

Von Vorteil ist dabei, dass auch bei Aufenthalt eines Roboters außerhalb der Sendereichweite der Basisstation ist ein Aufbau einer Kommunikationsverbindung ermöglicht, da über das Ad-hoc-Netzwerk die Informationen zu einem anderen Roboter übermittelbar sind, der wiederum an einen weiteren Roboter oder an die Basisstation die Information weitergibt. Auf diese Weise ist auch in einem von der Basisstation aus gesehenen Funkloch eine Informationsübertragung ermöglicht.

Des Weiteren ist auch ein Bestimmen der Position ermöglicht, indem der Roboter die Entfernung zu weiteren Robotern bestimmt und diese als Referenzsender, ähnlich wie bei einem GPS System, benutzt. Somit ist also auch außerhalb der Sendereichweite der Basisstation eine Positionsbestimmung ermöglicht. Dabei berücksichtigt der Roboter die Position des Referenzsenders. Vorzugsweise wird das Kommunikationssignal selbst als Grundlage für die Entfernungsbestimmung verwendet.

Bei einer vorteilhaften Ausgestaltung sind die Kommunikationsverbindungen zwischen den Robotern und der Basisstation nach Art eines Ad-Hoc-Netzwerkes aufgebaut. Von Vorteil ist dabei, dass nicht nur eine Kommunikation innerhalb des Netzwerkes ermöglicht ist, sondern auch eine Positionsbestimmung der Teilnehmer unter Zuhilfenahme der von den anderen Teilnehmern schon bestimmten Positionen. Besonders vorteilhaft ist dabei, dass ruhende Roboter ihre Position besonders genau bestimmen können, da mit zur Positionsbestimmung zunehmend zur Verfügung stehender Bestimmungszeit eine zunehmende Genauigkeit erzielbar ist. Wenn nun diese ruhenden Roboter entlang der Berandung des Arbeitsbereiches positioniert sind, ist es den im Arbeitsbereich bewegten Robotern ermöglicht, ihre Position in hoher Genauigkeit zu bestimmen, da sie stets in ihrer Nähe stets einen Referenzsender mit hoch genau bestimmter Position vorfinden.

Bei einer vorteilhaften Ausgestaltung ist im Speicher des Rechners zumindest eine Karte der Umgebung, insbesondere Landkarte, hinterlegbar. Von Vorteil ist dabei, dass jeder Roboter den anderen Roboter über von ihm detektierte bewegliche oder feststehende Hindernisse oder sonstige Fremdobjekte informiert und somit diese Informationen in der Karte eintragbar sind. Auf diese Weise ist eine verbesserte Bahnführung und eine verbesserte Positionsbestimmung ausführbar.

Bei einer vorteilhaften Ausgestaltung sind die Kommunikationsverbindungen, insbesondere des Ad-Hoc-Netzwerks, zur Übermittelung der Signale der Referenzsender geeignet ausgeführt. Von Vorteil ist dabei, dass der Referenzsender in erster Verwendung Signale für Kommunikation und in zweiter Verwendung, insbesondere gleichzeitig, Signale zur Positionsbestimmung sendet. Dadurch, dass also die Kommunikationssignale zur Positionsbestimmung verwendet werden, ist kein zusätzlicher Zeitbedarf und keine Einschränkung der Datenübertragungsrate notwendig.

Bei einer vorteilhaften Ausgestaltung ist zumindest eine Gruppe von Robotern gebildet, die synchronisiert bewegbar sind, insbesondere nach Art einer Master-Slave-Regelung, insbesondere wobei die relative Anordnung der Roboter zueinander im Wesentlichen unverändert ist während der Zeitspanne des Bestehens der Gruppe. Von Vorteil ist dabei, dass nur der Master seine Position bestimmen muss und die Bewegung der Gruppe anhand dieser Information vorgibt. Außerdem wird ein auf die Gruppe bezogenes Kommunikationsnetzwerk aufgebaut, in welchem die Roboter der Gruppe ungestört Daten austauschen. Auch die Durchleitung von Daten des Ad-Hoc-Netzwerks ist von einem ersten Roboter der Gruppe, der Teilnehmer des Ad-Hoc-Netzwerks ist, zu einem zweiten Roboter der Gruppe, der Teilnehmer des Ad-Hoc-Netzwerks ist, ermöglicht. Für dieses Kommunikationsnetzwerk innerhalb der Gruppe wird vorzugsweise eine andere Frequenz benutzt als für das Ad-hoc-Netzwerk. Außerdem wird vorzugsweise die Sendestärke, also Amplitude des Sendesignals reduziert, um die Sendereichweite nur unwesentlich über die räumliche Ausdehnung der Gruppe hinaus zu erstrecken.

Bei einer vorteilhaften Ausgestaltung bestimmen Roboter, insbesondere die als Slave fungierenden Roboter, ihren Abstand und ihre relativ zum Master bestehende Position mittels Abstandssensoren, insbesondere Radarsensoren und/oder Ultraschallsensoren, und regeln diese Relativposition mittels entsprechender Beeinflussung ihrer Antriebe auf eine Soll-Relativposition hin. Von Vorteil ist dabei, dass für die Positionier-Regelung innerhalb der Gruppe die Slaves andere Mittel als die ansonsten verwendete Positionsbestimmung benutzen. Somit ist eine höhere Genauigkeit für die Anordnung und Beabstandung innerhalb der Gruppe erreichbar. Außerdem sind die Abstände gering, so dass Abstandssensoren eine weitaus höhere Genauigkeit erreichbar machen als die Positionsbestimmung über das Ad-hoc-Netzwerk.

Bei einer vorteilhaften Ausgestaltung umfassen die Roboter ein Anti-Kollisionssystem, insbesondere auf Basis von Ultraschall und/oder Infrarot. Von Vorteil ist dabei, dass eine Gefährdung von Menschen und Sachen vermeidbar ist.

Bei einer vorteilhaften Ausgestaltung sind die Roboter induktiv mit Energie versorgbar, insbesondere aus im Boden verlegten Primärleitern. Hierzu umfassen die Roboter an ihrer Unterseite eine Sekundärwicklung, die mit den im Boden verlegten langgestreckt ausgeführten Primärleitern induktiv gekoppelt sind, wobei der Sekundärwicklung eine Kapazität derart in Reihe oder parallel zugeschaltet ist, dass die zugehörige Resonanzfrequenz im Wesentlichen der in den Primärleiter eingespeisten Frequenz gleicht, insbesondere im Beriech zwischen 10 und 500 kHz liegt, insbesondere zwischen 15kHz und 30kHz oder zwischen 15kHz und 50kHz. Von Vorteil ist dabei, dass die Wegbestimmung nicht ausschließlich zeitoptimiert erfolgt, sondern auch energieoptimiert ausführbar ist. Insbesondere ist der Ladezustand von Energiespeichern, die vom Roboter umfasst sind, mitberücksichtigbar. Dies bedeutet, dass bei fast leerem Ladezustand der Weg derart bestimmt wird, dass er vorwiegend entlang des Primärleiters erfolgt, und bei vollem Ladezustand derart, dass der Weg vorwiegend zeitoptimiert bestimmt ist.

Bei einer vorteilhaften Ausgestaltung weisen die Roboter ein Odometrie-System auf zur Unterstützung des Positionssystems. Von Vorteil ist dabei, dass die Genauigkeit erhöhbar ist und auch autonome Bewegungen des Roboters ermöglicht sind. Sogar bei Ausfall oder hoher Ungenauigkeit des Positionsbestimmungssystems mittels Referenzsender ist also eine ausreichende Genauigkeit bei vorübergehender Positionsbestimmung durch Odometrie ermöglicht. Außerdem sind als Sensoren für die Wegbestimmung Winkelsensoren der elektrischen Radantriebe verwendbar, wobei die Winkelsensoren auch zur Geschwindigkeitsregelung notwendig sind und somit keinen Zusatzaufwand darstellen.

Bei einer vorteilhaften Ausgestaltung fungieren zur Positionsbestimmung nur diejenigen Roboter als Referenzsender, welche innerhalb der Sendereichweite sich befinden und/oder mit denen eine Kommunikationsverbindung aufgebaut ist. Von Vorteil ist dabei, dass auch bei großer Entfernung von der Basisstation eine genaue Positionsbestimmung ermöglicht ist.

Bei einer vorteilhaften Ausgestaltung bestimmt innerhalb der Gruppe nur einer der Roboter, insbesondere der als Master fungierende Roboter, seine Position. Von Vorteil ist dabei, dass die Bewegung der Gruppe als Einheit steuerbar ist. Die Slaves bestimmen vorzugsweise mittels anderer Sensoren die Beabstandung und ihre relative Anordnung zum Master.

Wichtige Merkmale bei dem Verfahren zum Betreiben eines Systems sind, dass ein erster Roboter seine Position bestimmt, wobei er die Entfernung zu einem als Referenzsender fungierenden weiteren Roboter, insbesondere mit dem eine Kommunikationsverbindung zum ersten Roboter aufgebaut ist, und/oder zu einer als Referenzsender verwendeten Basisstation bestimmt, insbesondere wobei die Positionsinformationen anderer Roboter mitberücksichtigt wird.

Von Vorteil ist dabei, dass eine hohe Genauigkeit bei der Positionsbestimmung erreicht wird beziehungsweise eine genügend hohe Genauigkeit von bewegten Robotern, die in einem Arbeitsbereich bewegt werden, an dessen Rand ruhende Roboter eingesetzt sind, die als Referenzsender verwendbar sind und dienen.

Bei einer vorteilhaften Ausgestaltung wird zumindest einem der Roboter ein Auftrag zur Bildung einer Gruppe mitgeteilt, worauf dieser weitere Roboter anfragt um Beteiligung zur Bildung der Gruppe. Von Vorteil ist dabei, dass eine flexible Bildung von Gruppen ermöglicht ist.

Bei einer vorteilhaften Ausgestaltung wird die Gruppe synchronisiert bewegt und/oder betrieben, insbesondere zur Erfüllung einer Transportaufgabe für ein Objekt. Von Vorteil ist dabei, dass große Lasten, die von einem einzigen Roboter nicht transportierbar wären, mittels der Gruppe transportierbar sind.

Bei einer vorteilhaften Ausgestaltung teilt jeder Roboter nach Detektion eines Hindernisses eine entsprechende Information an andere, insbesondere alle, weiteren Roboter mit. Von Vorteil ist dabei, dass die Karte einem ständigen Verbesserungsprozess unterliegt und aktualisiert wird. Dabei speichert jeder Roboter die Karte im Speicherbereich seines Rechners.

Bei einer vorteilhaften Ausgestaltung überwachen Roboter einen Arbeitsbereich mittels jeweiligen Sensoren, insbesondere indem sie entlang der Berandung des Arbeitsbereiches sich aufgestellt haben, und nach Detektion eines Fremdobjektes, insbesondere beweglichen Fremdobjektes, eine Information an alle Teilnehmer des Ad-hoc-Netzwerks gesendet wird, worauf dann die Geschwindigkeit der Roboter abgesenkt oder auf Null gesetzt wird, insbesondere zumindest solange das Fremdobjekt im Arbeitsbereich detektierbar ist. Von Vorteil ist dabei, dass die Gefährdung von Menschen und Sachen verringert oder vermieden ist.

Weitere Vorteile ergeben sich aus den Unteransprüchen.

Die Erfindung wird nun anhand von Abbildungen näher erläutert:

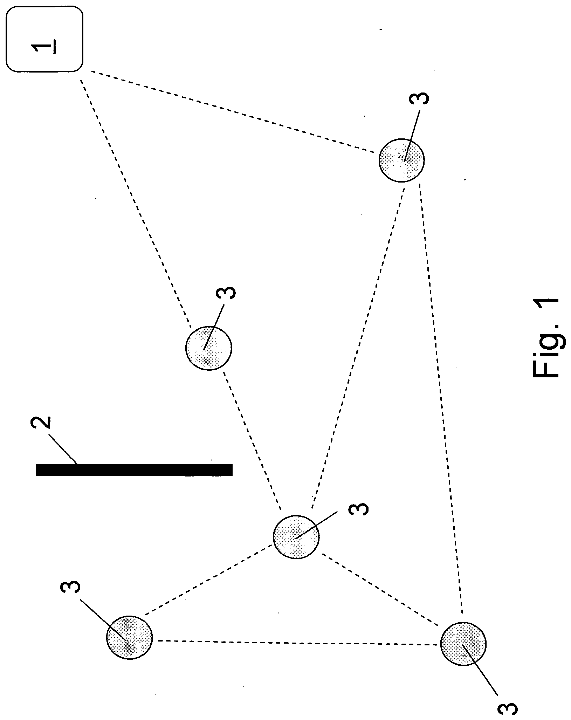

In der Figur 1 ist eine Ad-hoc-Netzwerk für eine Anlage mit Robotern dargestellt.

Dabei ist eine stationäre, also unbewegliche Basisstation 1 als Access Point für bewegbar ausgeführte Roboter ausgeführt. Jeder Roboter weist also Kommunikationsmittel auf, mit welchen eine Kommunikationsverbindung zur Basisstation 1 aufbaubar ist, wenn der Roboter 3 sich innerhalb der Sendereichweite der Basisstation 1 befindet und sich auch kein Hindernis für das Kommunikationsmedium, wie Funkwellen, Infrarot, Ultraschall, auf der Kommunikationsstrecke befindet.

Vorzugsweise ist das Kommunikationsmittel, wie beispielsweise Transceiver, konfigurierbar, bei dem also die Amplitude und Frequenz des Sendesignals veränderbar sind, insbesondere Werte aus einer Menge an Werten hierfür auswählbar sind.

Innerhalb der Anlage sind auch Hindernisse 2, insbesondere für Funkwellen undurchlässige Hindernisse, wie metallische Hindernisse, vorhanden, die unbeweglich oder beweglich sind. Beispiele sind Garagentor, Transportfahrzeuge, kurzfristig abgestellte Lasten und dergleichen.

Die Roboter 3 sind mit ihren Kommunikationsmitteln auch in der Lage, Kommunikationsverbindungen zu anderen Robotern 3 aufzubauen. Auf diese Weise ist ein Ad-hoc-Netzwerk geschaffen, dessen Reichweite die Sendereichweite der Basisstation 1 deutlich überschreitet. Außerdem sind auch Verbindungen zu Robotern aufbaubar, die in einem von der Basisstation 1 aus gesehenen Funkloch sich befinden.

Jeder Roboter 3 verfügt über ein verschiedene Sensoren, die zu einem Antikollisionssystem gehören. Beispielsweise sind als Sensoren Näherungssensoren oder Radarsensoren verwendbar. Der Rechner jedes Robotern umfasst eine Landkarte, auf der die bekannten Hindernisse eingetragen sind. Stellt einer der Roboter 3 ein weiteres Hindernis fest, wird dies den anderen Robotern 3 mitgeteilt, also allen Kommunikationsteilnehmern, vorzugsweise nach Art eines Broadcast-Telegramms.

Ebenso wird mitgeteilt, falls ein Roboter 3 das Wegfallen eines Hindernisses erkennt.

In einem weiteren erfindungsgemäßen Ausführungsbeispiel wird das Erkennen des Auftretens oder Wegfallens eines Hindernisses 2 nur dann von den anderen Robotern 3 voll berücksichtigt, wenn das Erkennen von zwei unabhängigen Robotern 3 stammt.

Zum Bestimmen seiner Position weist jeder Roboter entsprechende Mittel auf. Hierbei werden von der Basisstation 1 gesendete Signale ausgewertet, so dass ein Abstand zur Basisstation feststellbar ist.

Bei weiteren vorteilhaften Ausführungen umfassen die Roboter 3 auch ein Odometrie-System, so dass die zurückgelegten Wegestrecken relativ zu letzten bekannten Position des Roboters von der Positionsbestimmungsvorrichtung mitberücksichtigbar sind. Vorzugsweise sind hierzu am Roboter Radantriebe, insbesondere umfassend Elektromotoren mit Winkelsensoren, vorgesehen. Die zurückgelegten, von den Winkelsensoren erfassten Winkeldifferenzen werden mittels der bekannten Raddurchmesser und Lenkwinkelverläufen zur Bestimmung der jeweils aktuellen Position verwendet.

In einem weiteren erfindungsgemäßen Ausführungsbeispiel sind weitere aktive Referenzsender innerhalb der Anlage verteilt, so dass für zumindest einen Roboter 3 eine Bestimmung der Abstände zur Basisstation beziehungsweise zu den anderen Referenzsendern ermöglicht ist. Ähnlich zu einem GPS-System ist somit die Bestimmung der räumlichen Lage in hoher Genauigkeit ermöglicht.

Mittels Berücksichtigung der von der Basisstation und den Referenzsendern stammenden Entfernungsinformationen sowie der in der Landkarte eingetragenen Positionen dieser Sender und Station ist bei langsamer Fahrt oder ganz besonders bei Ruhelage eine hochgenaue Positionsbestimmung ermöglicht. Bei schnelleren Bewegungen werden zunehmend die odometrischen Daten berücksichtigt. Auf diese Weise ist eine genügend genaue Positionsbestimmung bei schnellen Bewegungen ermöglicht. Zusätzlich wird bei Detektion eines Hindernisses 2 auch diese Positionsinformation mitberücksichtigt, wenn dieses Hindernis schon bekannt und somit in der Landkarte eingetragen war.

In einem weiteren erfindungsgemäßen Ausführungsbeispiel sind weitere oder alternative System zur Positionsbestimmung verwendbar.

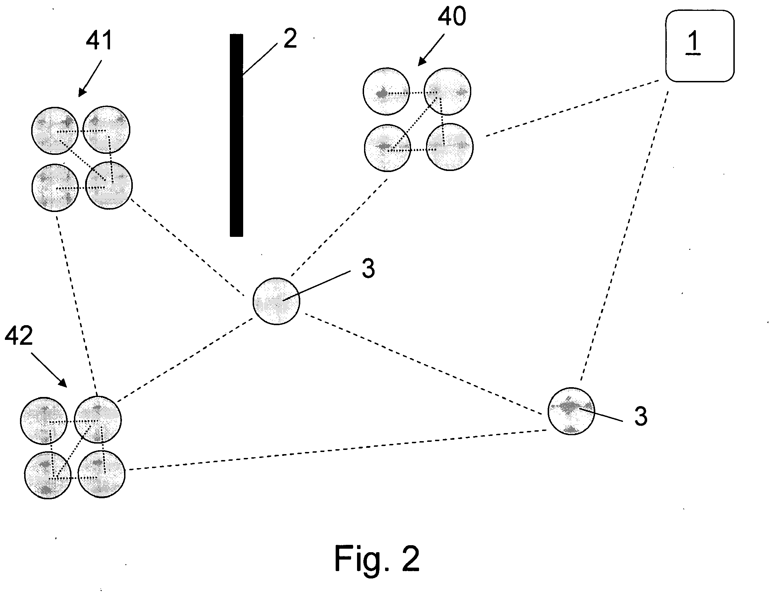

In Figur 2 sind Gruppen 40 von Robotern 3 gebildet. Diese Gruppen 40 dienen dazu, eine gemeinsame Aufgabe synchronisiert auszuführen, beispielsweise eine schwere und große Palette aufzunehmen und zu transportieren.

Zur Bildung der Gruppe bekommt ein erster Roboter einen Auftrag von der Basisstation. Zumindest die Anzahl der zu gruppierenden Roboter wird hierbei übermittelt. Sodann sucht der Roboter entsprechend viele weitere Roboter oder teilt die Aufgabe des Suchens weiterer Roboter nach dem Auffinden eines weiteren Roboters, der zugestimmt hat, die Gruppe zu bilden, mit diesem weiteren Roboter.

Innerhalb der Gruppe fahren die Antriebe der Roboter 3 synchronisiert. Hierzu wird einer der Roboter 3 der Gruppe 40 als Master-Antrieb und die anderen Roboter 3 der Gruppe als Slave-Antrieb eingesetzt. Der Master der Roboter 3 der Gruppe 40 überträgt ständig seine Positions- und/oder Geschwindigkeitsinformation, so dass die Slave-Roboter 3 der Gruppe 40 auf ihre entsprechende Position hin regeln können. Zu diesem Datenaustausch wird innerhalb der Gruppe 40 ein unabhängiges Kommunikationsnetz aufgebaut. Vorzugsweise wird hierzu für die Datenübertragung innerhalb der Gruppe eine andere Frequenz verwendet als diejenige, die für das Ad-hoc-Netzwerk verwendet wird. Außerdem wird die Signalstärke beim Senden reduziert, so dass nur Gruppenmitglieder einen genügend guten Empfang aufweisen und weit entfernte Roboter 3 keinen ausreichenden Empfang aufweisen.

Zumindest einer der Roboter 3 der Gruppe 40 ist weiterhin Teilnehmer des Ad-Hoc-Netzwerks und tauscht somit Daten von sich und/oder von anderen Mitgliedern der Gruppe 40 mit der Basisstation und/oder mit den anderen Robotern 3 aus. Vorzugsweise wird derjenige Roboter 3 der Gruppe 40 als Teilnehmer des Ad-Hoc-Netzwerks ausgewählt, der die größte Signalstärke der Basis-Station oder eines anderen Roboters detektiert. Es ist auch ein Routing ausführbar, bei dem ein erster Roboter der Gruppe Informationen empfängt, diese dann über das gruppenbezogene Kommunikationsnetz übermittelt und ein weiterer Roboter der Gruppe die Information dann weiter übermittelt an einen weiteren Teilnehmer des Ad-Hoc-Netzwerks.

Die Roboter der Gruppe tauschen auch Informationen bezüglich von Sensoren erfasste Werte physikalischer Größen aus.

Mittels der Signale der Basisstation und der Referenzsender bestimmt jeder Roboter, insbesondere auch jeder Roboter der Gruppe seine Position. Vorzugsweise sendet er selbst wiederum Signale aus, die Information über die bestimmte Position enthalten. In Weiterbildung wird mit dieser Information zusammen auch eine Information über den zugehörigen Fehler gesendet.

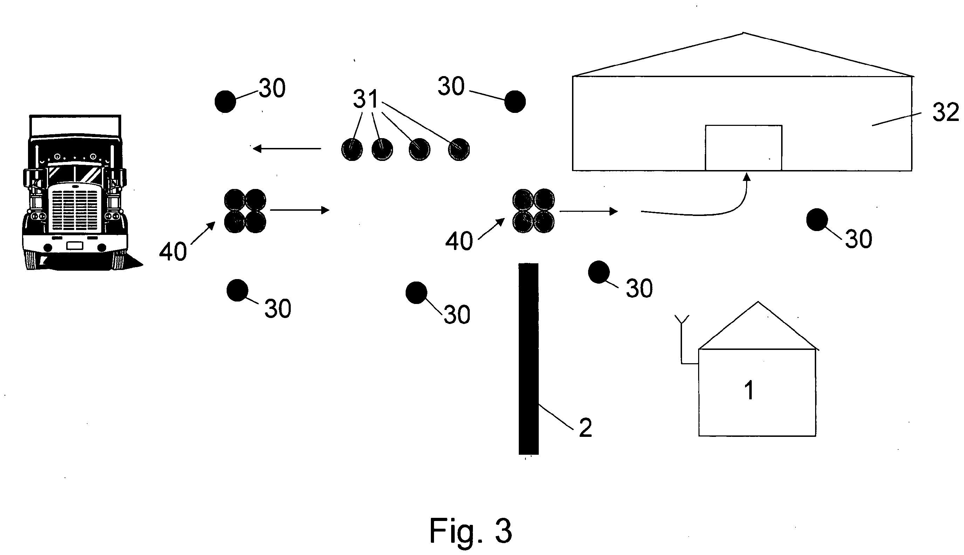

In Figur 3 ist für eine beispielhafte Anlage ein logistischer Vorgang, wie das Entladen eines Transportfahrzeugs gezeigt. Zu Beginn des Vorgangs werden Roboter 30 beauftragt einen Arbeitsbereich zu beaufsichtigen. Hierzu werden die Roboter 30 entlang der Berandung des Arbeitsbereiches positioniert. Diese Roboter 30 werden dann zeitweise, also für die Dauer des Vorgangs, in Ruhestellung versetzt, so dass von diesen Robotern 30 ihre jeweilige Position hochgenau bestimmbar ist. Somit dienen diese Roboter 30 wiederum als Referenzsender für Gruppen (40, 41, 42) und gegebenenfalls weitere Roboter 31, die währenddessen bewegt werden, insbesondere schnell bewegt werden.

Die Roboter 31 werden beauftragt zum Transportfahrzeug zu fahren und dort je nach Größe und Gewicht der aufzunehmenden Lasten einzeln oder als Gruppe (40, 41, 42) diese zum Lager 32 zu transportieren.

Nach Beendigung der Transportfahrt wird die Gruppe (40, 41, 42) gebildete Gruppe wieder aufgelöst und die Roboter fahren als einzelne Roboter 30 zurück zum Transportfahrzeug.

Bei einer weiteren erfindungsgemäßen Ausführung sind die Roboter auch mit Sensoren zur Erkennung von beweglichen Fremdobjekten, wie beispielsweise Menschen, ausgestattet. Sobald einer der Roboter ein solches Fremdobjekt, insbesondere im Arbeitsbereich, detektiert, wird eine entsprechende Information an die anderen Roboter 30 und die Roboter der Gruppe (40, 41, 42) weitergegeben. Nach Erhalt dieser Information wird die Geschwindigkeit aller Roboter und Gruppen von Robotern reduziert, beispielsweise auf Null oder einen endlichen Wert. Alle Roboter verfügen zusätzlich über ein Antikollisionssystem, so dass ein Unfall vermeidbar ist. Nach Verlassen des Arbeitsbereiches durch das Fremdobjekt wird die Geschwindigkeit wieder erhöht.

Alternativ kann auch bei Erkennen des Fremdobjektes die Geschwindigkeit erhöht werden und nach Verlassen des Fremdobjekts entsprechend wieder abgesenkt werden.

### Bezugszeichenliste

- 1: Basisstation, Access Point
- 2: Hindernis
- 3: Roboter
- 30: Roboter
- 31: Roboter
- 32: Lager
- 40: Gruppe
- 41: Gruppe
- 42: Gruppe

## Patentansprüche

1. System von mobilen Robotern (3, 30, 31) mit einer **unbeweglichen** Basisstation (1), wobei jeder Roboter (3, 30, 31) zumindest einen Rechner umfasst, mit dem zumindest Antriebe des Roboters (3, 30, 31) steuerbar sind,
**dadurch gekennzeichnet, dass**
jeder Roboter (3, 30, 31) ein mit dem jeweiligen Rechner verbundenes Kommunikationsmittel aufweist, mit dem eine Kommunikationsverbindung zur Basisstation (1) aufbaubar ist, **wenn** ein erster Roboter (3, 30, 31) der mobilen Roboter **sich innerhalb der Sendereichweite der Basisstation (1) befindet und sich auch kein Hindernis für das Kommunikationsmedium, wie Funkwellen, Infrarot, Ultraschall, auf der Kommunikationsstrecke befindet, und zu weiteren Robotern (3, 30, 31), die in einem von der Basisstation (1) aus gesehenen Funkloch sich befinden,**
wobei jeder Roboter der mobilen Roboter (3, 30, 31) ein Positionsbestimmungsmittel aufweist, das Information über die Position des Roboters (3, 30, 31) zumindest auch aus der Entfernungsbestimmung zu Referenzsendern ermittelt,
wobei die Basisstation (1) und alle Roboter (3, 30, 31) als Referenzsender geeignet ausgeführt sind und/oder fungieren,
**wobei durch zumindest einen der** mobilen **Roboter (3, 30, 31) mittels an ihn mitgeteiltem Auftrag zur Bildung einer Gruppe (40, 41, 42) weitere Roboter (3, 30, 31)** der mobilen Roboter **um Beteiligung zur Bildung der Gruppe** (40, 41, 42) angefragt werden,
**wobei die Gruppe (40, 41, 42) synchronisiert bewegt und betrieben wird zur Erfüllung einer Transportaufgabe für ein Objekt,**
**wobei die Kommunikationsverbindungen zwischen den Robotern (3, 30, 31) und der Basisstation (1) nach Art eines Ad-Hoc-Netzwerkes aufgebaut sind.**

2. System nach **Anspruch 1,**
**dadurch gekennzeichnet, dass**
im Speicher des Rechners zumindest eine Karte der Umgebung, insbesondere Landkarte, hinterlegbar ist.

3. System nach mindestens einem der vorangegangenen Ansprüche,
**dadurch gekennzeichnet, dass**
die Kommunikationsverbindungen, insbesondere des Ad-Hoc-Netzwerks, zur Übermittelung der Signale der Referenzsender geeignet ausgeführt sind und/oder dienen.

4. System nach mindestens einem der vorangegangenen Ansprüche,
**dadurch gekennzeichnet, dass**
zumindest eine Gruppe (40, 41, 42) von Robotern (3, 30, 31) gebildet ist, die synchronisiert bewegbar sind, insbesondere nach Art einer Master-Slave-Regelung, insbesondere wobei die relative Anordnung der Roboter (3, 30, 31) zueinander im Wesentlichen unverändert ist während der Zeitspanne des Bestehens der Gruppe (40, 41, 42),
insbesondere wobei Roboter (3, 30, 31), insbesondere die als Slave fungierenden Roboter (3, 30, 31), ihren Abstand und ihre relativ zum Master bestehende Position mittels Abstandssensoren, insbesondere Radarsensoren und/oder Ultraschallsensoren, bestimmen und diese Relativposition mittels entsprechender Beeinflussung ihrer Antriebe auf eine Soll-Relativposition hin regeln.

5. System nach mindestens einem der vorangegangenen Ansprüche,
**dadurch gekennzeichnet, dass**
die Roboter (3, 30, 31) ein Anti-Kollisionssystem umfassen, insbesondere auf Basis von Ultraschall und/oder Infrarot.

6. System nach mindestens einem der vorangegangenen Ansprüche,
**dadurch gekennzeichnet, dass**
die Roboter (3, 30, 31) induktiv mit Energie versorgbar sind, insbesondere aus im Boden verlegten Primärleitern.

7. System nach mindestens einem der vorangegangenen Ansprüche,
**dadurch gekennzeichnet, dass**
die Roboter (3, 30, 31) ein Odometrie-System aufweisen zur Unterstützung des Positionssystems.

8. System nach mindestens einem der vorangegangenen Ansprüche,
**dadurch gekennzeichnet, dass**
zur Positionsbestimmung nur diejenigen Roboter (3, 30, 31) als Referenzsender fungieren, welche innerhalb der Sendereichweite sich befinden und/oder mit denen eine Kommunikationsverbindung aufgebaut ist.

9. System nach mindestens einem der vorangegangenen Ansprüche,
**dadurch gekennzeichnet, dass**
innerhalb der Gruppe (40, 41, 42) nur einer der Roboter (3, 30, 31), insbesondere der als Master fungierende Roboter (3, 30, 31), seine Position bestimmt.

10. Verfahren zum Betreiben eines Systems nach mindestens einem der vorangegangenen Ansprüche,
**dadurch gekennzeichnet, dass**
ein erster **mobiler** Roboter (3, 30, 31) der mobilen Roboter seine Position bestimmt, wobei er die Entfernung zu einem als Referenzsender fungierenden weiteren Roboter der **mobilen** Roboter (3, 30, 31), mit dem eine Kommunikationsverbindung zum ersten Roboter (3, 30, 31) aufgebaut ist **und der sich in einem von der** unbeweglichen **Basisstation (1) aus gesehenen Funkloch befindet,** und zu der als Referenzsender verwendeten, **unbeweglichen** Basisstation (1) bestimmt, **wenn der erste Roboter (3, 30, 31) sich innerhalb der Sendereichweite der Basisstation (1) befindet und sich auch kein Hindernis für das Kommunikationsmedium, wie Funkwellen, Infrarot, Ultraschall, auf der Kommunikationsstrecke befindet,**
wobei Positionsinformationen anderer Roboter (3, 30, 31) der mobilen Roboter bei der Bestimmung mitberücksichtigt werden,
wobei durch zumindest einen der mobilen Roboter(3, 30, 31) mittels an ihn mitgeteiltem Auftrag zur Bildung einer Gruppe (40, 41, 42) weitere Roboter (3, 30, 31) der mobilen Roboter um Beteiligung zur Bildung der Gruppe (40, 41, 42) angefragt werden,
wobei die Gruppe (40, 41, 42) synchronisiert bewegt und betrieben wird zur Erfüllung einer Transportaufgabe für ein Objekt,
wobei die Kommunikationsverbindungen zwischen den Robotern (3, 30, 31) und der Basisstation (1) nach Art eines Ad-Hoc-Netzwerkes aufgebaut sind.

11. Verfahren nach Anspruch 10,
**dadurch gekennzeichnet, dass**
jeder Roboter (3, 30, 31) nach Detektion eines Hindernisses (2) eine entsprechende Information an andere, insbesondere alle, weiteren Roboter (3, 30, 31) mitteilt.

12. Verfahren nach einem der Ansprüche 10 oder 11,
**dadurch gekennzeichnet, dass**
die Roboter (3, 30, 31) einen Arbeitsbereich mittels jeweiligen Sensoren überwachen, insbesondere indem sie entlang der Berandung des Arbeitsbereiches sich aufgestellt haben, und nach Detektion eines Fremdobjektes, insbesondere beweglichen Fremdobjektes, eine Information an alle Teilnehmer des Ad-hoc-Netzwerks gesendet wird,
worauf dann die Geschwindigkeit der Roboter (3, 30, 31) verändert, insbesondere abgesenkt oder auf Null gesetzt, wird, insbesondere zumindest solange das Fremdobjekt im Arbeitsbereich detektierbar ist.

## Claims

1. System of mobile robots (3, 30, 31), comprising an immovable base station (1), each robot (3, 30, 31) comprising at least one computer, by which at least drives of the robot (3, 30, 31) can be controlled,
**characterised in that**
each robot (3, 30, 31) has a communications means, which is connected to the respective computer and by which it is possible to establish a communications link to the base station (1), if a first robot (3, 30, 31) of the mobile robots is positioned within the transmission range of the base station (1) and there is also no obstruction for the communications medium, such as radio waves, infrared or ultrasound, on the communication path, and to further robots (3, 30, 31) that are positioned in a dead zone when viewed from the base station (1),
each robot of the mobile robots (3, 30, 31) having a position determination means, which ascertains the information on the position of the robot (3, 30, 31) at least also from the distance determination with respect to reference transmitters,
the base station (1) and all the robots (3, 30, 31) being configured appropriately and/or acting as reference transmitters,
further robots (3, 30, 31) of the mobile robots being asked to participate in forming a group (40, 41, 42) by at least one of the mobile robots (3, 30, 31) by means of a request to form a group (40, 41, 42) sent to said at least one robot,
the group (40, 41, 42) being moved and operated in synchronisation in order to complete a transportation task for an object,
the communications links between the robots (3, 30, 31) and the base station (1) being established in the manner of an ad hoc network.

2. System according to claim 1,
**characterised in that**
at least one chart of the surroundings, in particular a map, can be stored in the memory of the computer.

3. System according to at least one of the preceding claims,
**characterised in that**
the communications links, in particular of the ad hoc network, are configured appropriately and/or used for transmitting the signals of the reference transmitters.

4. System according to at least one of the preceding claims,
**characterised in that**
at least one group (40, 41, 42) of robots (3, 30, 31) is formed, which group can be moved in synchronisation, in particular in the manner of a master-slave control, the relative arrangement of the robots (3, 30, 31) to one another in particular being substantially unchanged over the time period in which the group (40, 41, 42) exists,
robots (3, 30, 31), in particular the robots (3, 30, 31) acting as slaves, in particular determining their distance and their position relative to the master by means of distance sensors, in particular radar sensors and/or ultrasound sensors, and controlling this relative position towards a target relative position by influencing their drives accordingly.

5. System according to at least one of the preceding claims,
**characterised in that**
the robots (3, 30, 31) comprise an anti-collision system, in particular based on ultrasound and/or infrared.

6. System according to at least one of the preceding claims,
**characterised in that**
the robots (3, 30, 31) can be supplied with energy inductively, in particular from primary conductors laid in the ground.

7. System according to at least one of the preceding claims,
**characterised in that**
the robots (3, 30, 31) have an odometry system for assisting the positioning system.

8. System according to at least one of the preceding claims,
**characterised in that**
for the purpose of position determination, only the robots (3, 30, 31) which are positioned within the transmission range and/or with which a communications link has been established act as reference transmitters.

9. System according to at least one of the preceding claims,
**characterised in that**
within the group (40, 41, 42), only one of the robots (3, 30, 31), in particular the robot (3, 30, 31) acting as the master, determines its position.

10. Method for operating a system according to at least one of the preceding claims,
**characterised in that**
a first mobile robot (3, 30, 31) of the mobile robots determines its position, said robot determining the distance from a further robot of the mobile robots (3, 30, 31), which further robot is acting as a reference transmitter and by means of which a communications link to the first robot (3, 30, 31) is established and said further robot being located in a dead zone when viewed from the immovable base station (1), and the distance from the immovable base station (1) used as a reference transmitter, when the first robot (3, 30, 31) is positioned within the transmission range of the base station (1) and there is also no obstruction for the communications medium, such as radio waves, infrared or ultrasound, on the communications path,
positional information of other robots (3, 30, 31) of the mobile robots being taken into consideration during the determination,
further robots (3, 30, 31) of the mobile robots being asked to participate in forming a group (40, 41, 42) by at least one of the mobile robots (3, 30, 31) by means of a request to form a group (40, 41, 42) sent to said at least one robot,
the group (40, 41, 42) being moved and operated in synchronisation in order to complete a transportation task for an object,
the communications links between the robots (3, 30, 31) and the base station (1) being established in the manner of an ad hoc network.

11. Method according to claim 10,
**characterised in that**
following detection of an obstruction (2), each robot (3, 30, 31) sends corresponding information to other, in particular all, further robots (3, 30, 31).

12. Method according to any of claims 10 or 11,
**characterised in that**
the robots (3, 30, 31) monitor a work region by means of respective sensors, in particular by lining up along the edge of the work region and transmitting information to all participants of the ad hoc network following detection of a foreign object, in particular a moving foreign object,
at which point the speed of the robots (3, 30, 31) is then changed, in particular is reduced or set at zero, in particular for at least as long as the foreign object can be detected in the work region.

## Revendications

1. Système de robots mobiles (3, 30, 31) avec une station de base fixe (1), dans lequel chaque robot (3, 30, 31) comprend au moins un ordinateur avec lequel au moins des entraînements du robot (3, 30, 31) peuvent être commandés, **caractérisé en ce**
**que** chaque robot (3, 30, 31) présente un moyen de communication relié à l'ordinateur respectif, avec lequel il est possible d'établir une liaison de communication avec la station de base (1) si un premier robot (3, 30, 31) des robots mobiles se trouve à portée d'émission de la station de base (1) et s'il n'y a pas d'obstacle pour le support de communication, tel que des ondes radio, des infrarouges, des ultrasons, sur la voie de communication, et avec d'autres robots (3, 30, 31) qui se trouvent dans une zone blanche vue de la station de base (1), dans lequel chaque robot des robots mobiles (3, 30, 31) présente un moyen de détermination de position qui détermine des informations sur la position du robot (3, 30, 31) également au moins à partir de la détermination de distance par rapport à des émetteurs de référence,
dans lequel la station de base (1) et tous les robots (3, 30, 31) sont réalisés de manière appropriée et/ou fonctionnent comme des émetteurs de référence,
dans lequel au moins l'un des robots mobiles (3, 30, 31) demande à d'autres robots (3, 30, 31) des robots mobiles, au moyen d'un ordre de formation de groupe (40, 41, 42) qui lui est communiqué, de participer à la formation du groupe (40, 41, 42),
dans lequel le groupe (40, 41, 42) se déplace et fonctionne de manière synchronisée pour remplir une tâche de transport pour un objet,
dans lequel les liaisons de communication entre les robots (3, 30, 31) et la station de base (1) sont établies à la manière d'un réseau ad hoc.

2. Système selon la revendication 1,
**caractérisé en ce**
**qu'**au moins une carte de l'environnement, en particulier une carte géographique, peut être stockée dans la mémoire de l'ordinateur.

3. Système selon au moins l'une des revendications précédentes,
**caractérisé en ce**
**que** les liaisons de communication, en particulier du réseau ad hoc, sont réalisées de manière appropriée pour transmettre et/ou servent à transmettre les signaux des émetteurs de référence.

4. Système selon au moins l'une des revendications précédentes,
**caractérisé en ce**
**qu'**au moins un groupe (40, 41, 42) est formé par des robots (3, 30, 31) qui sont déplaçables de manière synchronisée, en particulier à la manière d'une régulation maître-esclave, en particulier dans lequel la disposition relative des robots (3, 30, 31) les uns par rapport aux autres est sensiblement inchangée pendant la période d'existence du groupe (40, 41, 42),
en particulier dans lequel des robots (3, 30, 31), en particulier les robots (3, 30, 31) fonctionnant comme esclaves, déterminent leur distance et leur position par rapport au maître au moyen de capteurs de distance, en particulier de capteurs radar et/ou de capteurs à ultrasons, et régulent cette position relative sur une position relative de consigne en exerçant une influence correspondante sur leurs entraînements.

5. Système selon au moins l'une des revendications précédentes,
**caractérisé en ce**
**que** les robots (3, 30, 31) comprennent un système anticollision, en particulier à base d'ultrasons et/ou d'infrarouges.

6. Système selon au moins l'une des revendications précédentes,
**caractérisé en ce**
**que** les robots (3, 30, 31) peuvent être alimentés en énergie par induction, en particulier à partir de conducteurs primaires posés dans le sol.

7. Système selon au moins l'une des revendications précédentes,
**caractérisé en ce**
**que** les robots (3, 30, 31) présentent un système d'odométrie pour soutenir le système de positionnement.

8. Système selon au moins l'une des revendications précédentes,
**caractérisé en ce**
**que** seuls les robots (3, 30, 31) qui se trouvent à portée d'émission et/ou avec lesquels une liaison de communication a été établie fonctionnent comme émetteurs de référence pour la détermination de position.

9. Système selon au moins l'une des revendications précédentes,
**caractérisé en ce**
**que** dans le groupe (40, 41, 42), un seul des robots (3, 30, 31), en particulier le robot (3, 30, 31) fonctionnant comme maître, détermine sa position.

10. Procédé pour faire fonctionner un système selon au moins l'une des revendications précédentes,
**caractérisé en ce**
**qu'**un premier robot mobile (3, 30, 31) des robots mobiles détermine sa position, dans lequel il détermine la distance par rapport à un autre robot des robots mobiles (3, 30, 31) fonctionnant comme émetteur de référence, avec lequel une liaison de communication avec le premier robot (3, 30, 31) est établie et qui se trouve dans une zone blanche vue de la station de base fixe (1), et par rapport à la station de base fixe (1) utilisée comme émetteur de référence si le premier robot (3, 30, 31) se trouve à portée d'émission de la station de base (1) et s'il n'y a pas d'obstacle pour le support de communication, tel que des ondes radio, des infrarouges, des ultrasons, sur la voie de communication,
dans lequel des informations de position d'autres robots (3, 30, 31) des robots mobiles sont également prises en compte pour la détermination,
dans lequel au moins l'un des robots mobiles (3, 30, 31) demande à d'autres robots (3, 30, 31) des robots mobiles, au moyen d'un ordre de formation de groupe (40, 41, 42) qui lui est communiqué, de participer à la formation du groupe (40, 41, 42),
dans lequel le groupe (40, 41, 42) se déplace et fonctionne de manière synchronisée pour remplir une tâche de transport pour un objet,
dans lequel les liaisons de communication entre les robots (3, 30, 31) et la station de base (1) sont établies à la manière d'un réseau ad hoc.

11. Procédé selon la revendication 10,
**caractérisé en ce**
**que** chaque robot (3, 30, 31), après avoir détecté un obstacle (2), communique une information correspondante à d'autres robots (3, 30, 31), en particulier à tous les autres robots (3, 30, 31).

12. Procédé selon l'une des revendications 10 ou 11,
**caractérisé en ce**
**que** les robots (3, 30, 31) surveillent une zone de travail au moyen de capteurs respectifs, en particulier en se plaçant le long de la bordure de la zone de travail, et après détection d'un objet étranger, en particulier d'un objet étranger en mouvement, une information est envoyée à tous les participants du réseau ad hoc, à la suite de quoi la vitesse des robots (3, 30, 31) est modifiée, en particulier abaissée ou ramenée à zéro, en particulier au moins aussi longtemps que l'objet étranger peut être détecté dans la zone de travail.
